# EUROPEAN PATENT SPECIFICATION

(11) **EP 1 568 030 B1**
(45) Date of publication and mention of the grant of the patent: **21.01.2015**
(21) Application number: 03811959.0
(22) Date of filing: 07.11.2003
(51) Int. Cl.: G11B 27/034, G11B 27/10, G11B 27/32, H04N 9/804

(54) **RECORDING MEDIUM HAVING DATA STRUCTURE FOR MANAGING REPRODUCTION OF MULTIPLE REPRODUCTION PATH VIDEO DATA RECORDED THEREON AND RECORDING AND REPRODUCING METHODS AND APPARATUSES**
AUFZEICHNUNGSMEDIUM MIT EINER DATENSTRUKTUR ZUR VERWALTUNG DER WIEDERGABE VON DARAUF AUFGEZEICHNETEN MEHRFACH?WIEDERGABE WEGVIDEODATEN UND AUFZEICHNUNGS- UND WIEDERGABEVERFAHREN UND VORRICHTUNGEN
SUPPORT D'ENREGISTREMENT PRESENTANT UNE STRUCTURE DE DONNEES POUR UNE GESTION DE REPRODUCTION DE DONNEES VIDEO PRESENTANT PLUSIEURS CHEMINS DE REPRODUCTION, ENREGISTREES SUR CETTE STRUCTURE ; AINSI QUE PROCEDES ET APPAREILS D'ENREGISTREMENT ET DE REPRODUCTION ASSOCIES

(30) Priority: 22.11.2002 KR 2002072922
(43) Date of publication of application: 31.08.2005
(73) Proprietor: LG Electronics, Inc., Seoul 150-010 (KR)
(72) Inventor: KIM, Byung Jin, 463-010 Sungnam, Kyunggi-do (KR); SEO, Kang Soo, 431-075 Anyang, Kyunggi-do (KR); UM, Soung Hyun, 431-050 Anyang, Kyunggi-do (KR)
(74) Representative: Diehl & Partner GbR
(86) International application number: PCT/KR2003/002384
(87) International publication number: WO 2004/049330

(56) References cited:
- EP-A- 0 788 105
- EP-A- 0 875 856
- EP-A- 0 903 744
- JP-A- 10 271 449
- JP-A- 11 103 444
- JP-A- 2002 216 460
- JP-A- 2002 299 836
- US-A1- 2002 097 971

## Description

### 1. TECHNICAL FIELD

The present invention relates to a recording medium having a data structure for managing reproduction of at least multiple reproduction path video data recorded thereon as well as methods and apparatuses for reproduction and recording.

### 2. BACKGROUND ART

The standardization of new high-density read only and rewritable optical disks capable of recording large amounts of high-quality video and audio data has been progressing rapidly and new optical disk related products are expected to be commercially available on the market in the near future. The Blu-ray Disc Rewritable (BD-RE) is one example of these new optical disks.

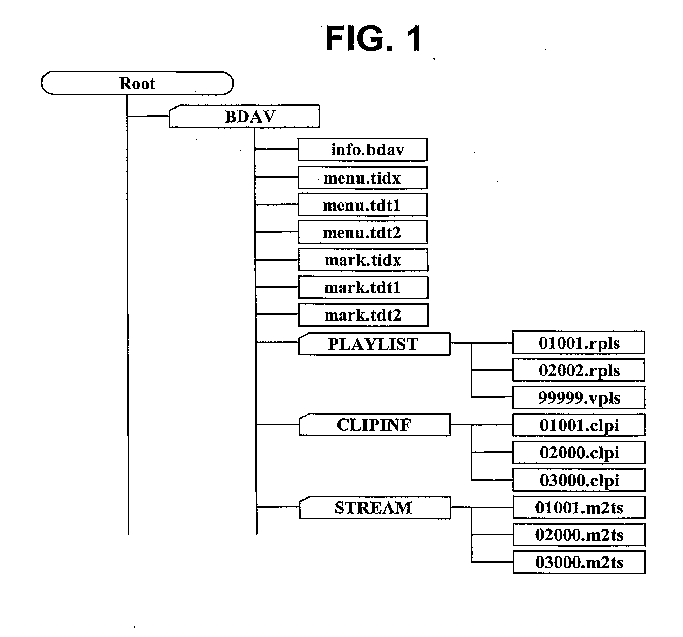

Fig. 1 illustrates the file structure of the BD-RE. The file structure or data structure provides for managing the reproduction of the video and audio data recorded on the BD-RE. As shown, the data structure includes a root directory that contains at least one BDAV directory. The BDAV directory includes files such as 'info.bdav', 'menu.tidx', and 'mark.tidx', a PLAYLIST subdirectory in which playlist files (*.rpls and *.vpls) are stored, a CLIPINF subdirectory in which clip information files (*.clpi) are stored, and a STREAM subdirectory in which MPEG2-formatted A/V stream clip files (*.m2ts) corresponding to the clip information files are stored. In addition to illustrating the data structure of the optical disk, Fig. 1 represents the areas of the optical disk. For example, the general information file info.bdav is stored in a general information area or areas on the optical disk.

Because the BD-RE data structure and disk format as illustrated in Fig. 1 is well-known and readily available, only a brief overview of the file structure will be provided in this disclosure.

As alluded to above, the STREAM directory includes MPEG2-formatted A/V stream files called clips or clip files. The STREAM directory may also include a special type of clip referred to as a bridge-clip A/V stream file. A bridge-clip is used for making seamless connection between two or more presentation intervals selected in the clips, and generally have a small data size compared to the clips. The A/V stream includes source packets of video and audio data. For example, a source packet of video data includes a header and a transport packet. A source packet includes a source packet number, which is generally a sequentially assigned number that serves as an address for accessing the source packet. Transport packets include a packet identifier (PID). The PID identifies the sequence of transport packets to which a transport packet belongs. Each transport packet in the sequence will have the same PID.

The CLIPINF directory includes a clip information file associated with each A/V stream file. The clip information file indicates, among other things, the type of A/V stream associated therewith, sequence information, program information and timing information. The sequence information describes the arrival time basis (ATC) and system time basis (STC) sequences. For example, the sequence information indicates, among other things, the number of sequences, the beginning and ending time information for each sequence, the address of the first source packet in each sequence and the PID of the transport packets in each sequence. A sequence of source packets in which the contents of a program is constant is called a program sequence. The program information indicates, among other things, the number of program sequences, the starting address for each program sequence, and the PID(s) of transport packets in a program sequence.

The timing information is referred to as characteristic point information (CPI). One form of CPI is the entry point (EP) map. The EP map maps a presentation time stamp (e.g. , on an arrival time basis (ATC) and/or a system time basis (STC)) to a source packet address (i.e., source packet number). The presentation time stamp (PTS) and the source packet number (SPN) are related to an entry point in the AV stream; namely, the PTS and its related SPN point to an entry point on the AV stream. The packet pointed to is often referred to as the entry point packet.

The PLAYLIST directory includes one or more playlist files. The concept of a playlist has been introduced to promote ease of editing/assembling clips for playback. A playlist file is a collection of playing intervals in the clips. Each playing interval is referred to as a playitem. The playlist file, among other things, identifies each playitem forming the playlist, and each playitem, among other things, is a pair of IN-point and.OUT-point that point to positions on a time axis of the clip (e.g., presentation time stamps on an ATC or STC basis). Expressed another way, the playlist file identifies playitems, each playitem points to a clip or portion thereof and identifies the clip information file associated with the clip. The clip information file is used, among other things, to map the playitems to the clip of source packets.

A playlist directory may include real playlists (*.rpls) and virtual playlists (*.vpls). A real playlist can only use clips and not bridge-clips. Namely, the real playlist is considered as referring to parts of clips, and therefore, conceptually considered equivalent in disk space to the referred to parts of the clips. A virtual playlist can use both clips and bridge-clips, and therefore, the conceptual considerations of a real playlist do not exist with virtual playlists.

The info.bdav file is a general information file that provides general information for managing the reproduction of the A/V stream recorded on the optical disk. More specifically, the info.bdav file includes, among other things, a table of playlists that identifies the file names of the playlist in the PLAYLIST directory of the same BDAV directory.

The menu.tidx, menu.tdt1 and menu.tdt2 files store information related to menu thumbnails. The mark.tidx, mark.tdt1 and mark.tdt2 files store information that relates to mark thumbnails. Because these files are not particularly relevant to the present invention, they will not be discussed further.

European patent application EP 0 903 744 A2 discloses an optical disc including a data area for recording video objects and an index area for recording original type chain information and user-defined type chain information. The original type chain information manages the video objects in file sections such that the file sections are reproduced in the order at which they are arranged in the video objects. The user-defined type chain information defines reproduction routes different from the order at which the file sections are arranged in the video object.

The standardization for high-density read-only optical disks such as the Blu-ray ROM (BD-ROM) is still under way. An effective data structure for managing reproduction of video and audio data recorded on the high-density read-only optical disk such as a BD-ROM is not yet available.

### 3. DISCLOSURE OF INVENTION

The recording medium according to the present invention includes a data structure for managing reproduction of at least multiple reproduction path video data (e.g., different camera angles of video data) recorded on the recording medium.

It is noted that all examples given below which do not fall under the scope of the invention as set out in the appended claims are not to be considered as embodiments and examples of the invention.

In one exemplary embodiment, the recording medium includes a data area storing clip files of at least a video data stream. Each clip file is associated with one of a common reproduction path portion and a particular reproduction path portion of the video data stream. In one exemplary embodiment, the clip files are interleaved. For example, the clip files associated with particular reproduction path portions are interleaved between the clip files associated with common reproduction path portions.

In another exemplary embodiment, the clip files have a size to prevent a reproducing apparatus buffer from under-flowing during reproduction of the clip files. In a further embodiment, the clip files have a size to prevent the reproducing apparatus buffer from over-flowing during reproduction of the clip files.

The present invention further provides apparatuses and methods for recording and reproducing the data structure according to the present invention.

### 4. BRIEF DESCRIPTION OF DRAWINGS

The above features and other advantages of the present invention will be more clearly understood from the following detailed description taken in conjunction with the accompanying drawings, in which:
Fig. 1 illustrates the prior art file or data structure of a rewritable optical disk according to the Blu-ray Disc Rewritable (BD-RE) standard;
Fig. 2 illustrates an exemplary embodiment of a recording medium file or data structure according to the present invention;
Fig. 3 illustrates an example of a recording medium having the data structure of Fig. 2 stored thereon;
Figs. 4 - 5 illustrate embodiments of the data structure associated with reproduction path management for use in the data structure according to Fig. 2; and
Fig. 6 illustrates a schematic diagram of an embodiment of an optical disk recording and reproduction apparatus of the present invention.

### 5. MODES FOR CARRYING OUT THE INVENTION

In order that the invention may be fully understood, exemplary embodiments thereof will now be described with reference to the accompanying drawings.

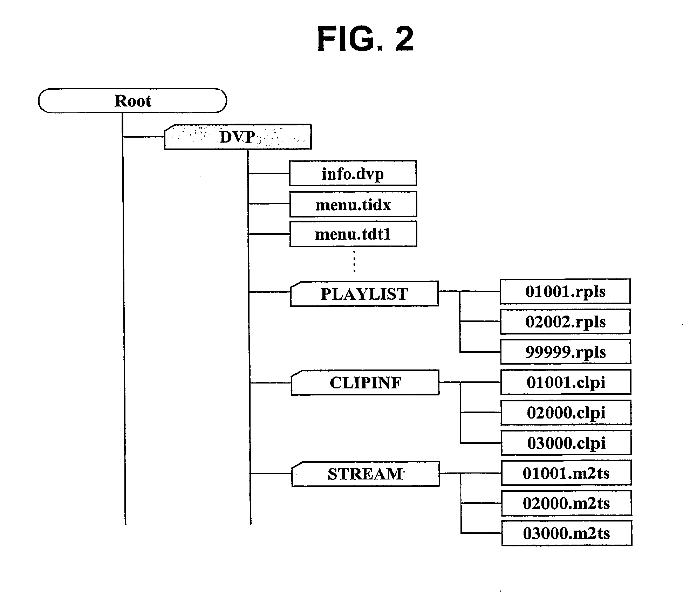

A high-density optical disk, for example, a Blu-Ray ROM (BD-ROM), BD-RE, etc. in accordance with the invention may have a file or data structure for managing reproduction of video and audio data as shown in Fig. 2. Many aspects of the data structure according to the present invention shown in Fig. 2 are similar to that of the BD-RE standard discussed with respect to Fig 1. As such these aspects will not be described in great detail.

As shown in Fig. 2, the root directory contains at least one DVP directory. The DVP directory includes a general information file info.dvp, menu files menu.tidx, menu.tdt1 among others, a PLAYLIST directory in which playlist files (e.g., real (*.rpls) and virtual (*.vpls)) are stored, a CLIPINF directory in which clip information files (*.clpi) are stored, and a STREAM directory in which MPEG2-formatted A/V stream clip files (*.m2ts), corresponding to the clip information files, are stored.

The STREAM directory includes MPEG2-formatted A/V stream files called clips or clip files. The A/V stream includes source packets of video and audio data. For example, a source packet of video data includes a header and a transport packet. A source packet includes a source packet number, which is generally a sequentially assigned number that serves as an address for accessing the source packet. Transport packets include a packet identifier (PID). The PID identifies the sequence of transport packets to which a transport packet belongs. Each transport packet in the sequence will have the same PID.

The CLIPINF directory includes a clip information file associated with each A/V stream file. The clip information file indicates, among other things, the type of A/V stream associated therewith, sequence information, program information and timing information. The sequence information describes the arrival time basis (ATC) and system time basis (STC) sequences. For example, the sequence information indicates, among other things, the number of sequences, the beginning and ending time information for each sequence, the address of the first source packet in each sequence and the PID of the transport packets in each sequence. A sequence of source packets in which the contents of a program is constant is called a program sequence. The program information indicates, among other things, the number of program sequences, the starting address for each program sequence, and the PID(s) of transport packets in a program sequence.

The timing information is referred to as characteristic point information (CPI). One form of CPI is the entry point (EP) map. The EP map maps a presentation time stamp (e.g. , on an arrival time basis (ATC) and/or a system time basis (STC)) to a source packet address (i.e., source packet number). The presentation time stamp (PTS) and the source packet number (SPN) are related to an entry point in the AV stream; namely, the PTS and its related SPN point to an entry point on the AV stream. The packet pointed to is often referred to as the entry point packet.

The PLAYLIST directory includes one or more playlist files. The concept of a playlist has been introduced to promote ease of editing/assembling clips for playback. A playlist file is a collection of playing intervals in the clips. Each playing interval is referred to as a playitem. The playlist file, among other things, identifies each playitem forming the playlist, and each playitem, among other things, is a pair of IN-point and OUT-point that point to positions on a time axis of the clip (e.g., presentation time stamps on an ATC or STC basis) . Expressed another way, the playlist file identifies playitems, each playitem points to a clip or portion thereof and identifies the clip information file associated with the clip. The clip information file is used, among other things, to map the playitems to the clip of source packets.

A playlist directory may include real playlists (*.rpls) and virtual playlists (*.vpls). A real playlist can only use clips and not bridge-clips. Namely, the real playlist is considered as referring to parts of clips, and therefore, conceptually considered equivalent in disk space to the referred to parts of the clips. A virtual playlist can use both clips and bridge-clips, and therefore, the conceptual considerations of a real playlist do not exist with virtual playlists.

The info.dvp file is a general information file that provides general information for managing the reproduction of the A/V streams recorded on the optical disk. More specifically, the info.dvp file includes, among other things, a table of playlists that identifies the file names of the playlists in the PLAYLIST directory. The info.dvp file will be discussed in greater detail below with respect to the embodiments of the present invention.

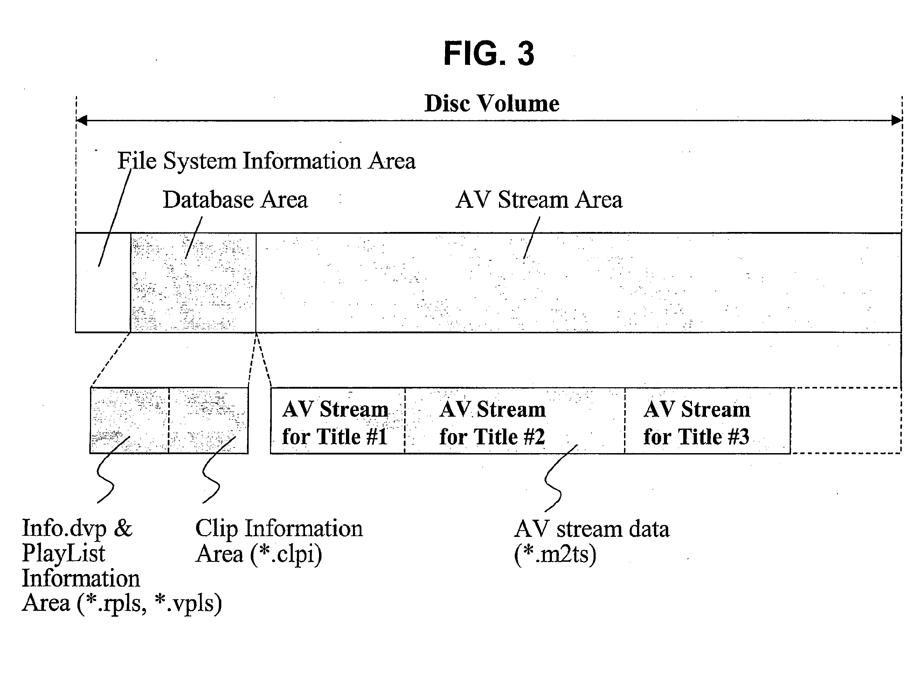

In addition to illustrating the data structure of the recording medium according to an embodiment of the present invention, Fig. 2 represents the areas of the recording medium. For example, the general information file is recorded in one or more general information areas, the playlist directory is recorded in one or more playlist directory areas, each playlist in a playlist directory is recorded in one or more playlist areas of the recording medium, etc. Fig. 3 illustrates an example of a recording medium having the data structure of Fig. 2 stored thereon. As shown, the recording medium includes a file system information area, a data base area and an A/V stream area. The data base area includes a general information file and playlist information area and a clip information area. The general information file and playlist information area have the general information file recorded in a general information file area thereof, and the PLAYLIST directory and playlist files recorded in a playlist information area thereof. The clip information area has the CLIPINFO directory and associated clip information files recorded therein. The A/V stream area has the A/V streams for the various titles recorded therein.

Video and audio data are typically organized as individual titles; for example, different movies represented by the video and audio data are organized as different titles. Furthermore, a title may be organized into individual chapters in much the same way a book is often organized into chapters.

Because of the large storage capacity of the newer, high-density recording media such as BD-ROM and BD-RE optical disks, different titles, various versions of a title or portions of a title may be recorded, and therefore, reproduced from the recording media. For example, video data representing different camera angles may be recorded on the recording medium. As another example, versions of a title or portions thereof associated with different languages may be recorded on the recording medium. As a still further example, a director's version and a theatrical version of a title may be recorded on the recording medium. Or, an adult version, young adult version and young child version (i.e. , different parental control versions) of a title or portions of a title may be recorded on the recording medium. Each version, camera angle, etc. represents a different reproduction path, and the video data in these instances is referred to as multiple reproduction path video data. It will be appreciated that the above examples of multiple reproduction path video data are not limiting, and the present invention is applicable to any type or combination of types of multiple reproduction path video data. As will be described in detail below with respect to embodiments of the present invention, the data structures according to the present invention include path management information, navigation information, and/or are structured for managing reproduction of multiple reproduction path video data recorded on the recording medium.

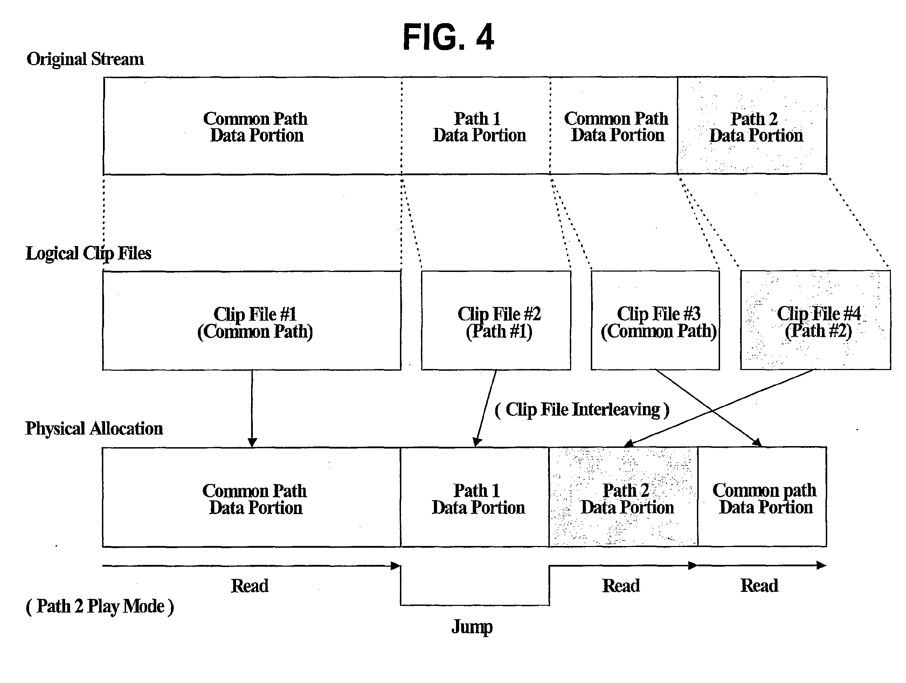

A first embodiment of the reproduction path management data structure for use in the data structure according to Fig. 2 will now be described with respect to Fig. 4.

An original data stream includes portions of video data common to all reproduction paths and portions of video data specific to particular reproduction paths. According to an embodiment of the present invention, the respective portions are stored as clip files on the recording medium. More specifically, the clip files may be stored interleaved on the recording medium. Fig. 4 illustrates an example of the above-described embodiment of the present invention.

As shown, an original data stream to be recorded on the recording medium (e.g., a BD-ROM) has an order of a common path data portion, a first reproduction path data portion, another common path data portion, and a second reproduction path data portion. The first common path data portion is managed as a first clip file Clip File #1, the first reproduction path data portion is managed as a second clip file Clip File #2, the second common path data portion is managed as a third clip file Clip File #3, and the second reproduction path data portion is managed as a fourth clip file Clip File #4.

The first through fourth clip files Clip File #1, Clip File #2, Clip File #3, and Clip File #4 are recorded in a physically interleaved fashion on the recording medium. As shown, the physical recording is successively carried out in the order of the first common path data portion of the first clip file, the first reproduction path data stream of the second clip file, the second reproduction path data portion of the fourth clip file, and the second common path data portion of the third clip file.

Accordingly, the first reproduction path data portion of the second clip file and the second reproduction path data portion of the fourth clip file are recorded in an interleaved state between the first common path data portion of the first clip file and the second common path data portion of the third clip file.

When a reproduction operation for the data of the second reproduction path is designated at the request of the user using an optical disc reproducing apparatus, the optical disc apparatus reads out and reproduces the first common path data portion of the first clip file, and then carries out a jumping operation to the second reproduction path data portion of the fourth clip file, as shown in Fig. 4. Thereafter, the optical disc apparatus carries out a reproduction operation for the second reproduction path by reading out and reproducing the second common path data portion of the third clip file. Accordingly, the user can selectively play a data stream of a desired reproduction path.

The length of each clip file should be appropriately set so as to prevent any buffer underflow from occurring during a jumping operation from one clip file to another clip file while preventing the buffer size from becoming excessively large. For example, in the case of an excessively short clip file length, a buffer underflow of the reproducing apparatus may occur during a big jump operation. Furthermore, there is a drawback in that it is necessary to manage a relatively large number of clip files.

On the other hand, in the case of an long clip file length, the need for a buffer having a size adapted to temporarily store a read data stream may significantly increase the cost of the reproducing apparatus. For this reason, the length of each clip file is set, taking into consideration buffer underflow, buffer size, and efficiencies of recording and managing the clip file.

Another embodiment of the present invention takes these factors into account by limiting the size of a clip file to a maximum file size Clip File_Max Size. As a consequence, one or more data portions of the original data stream may be stored as more than one clip file.

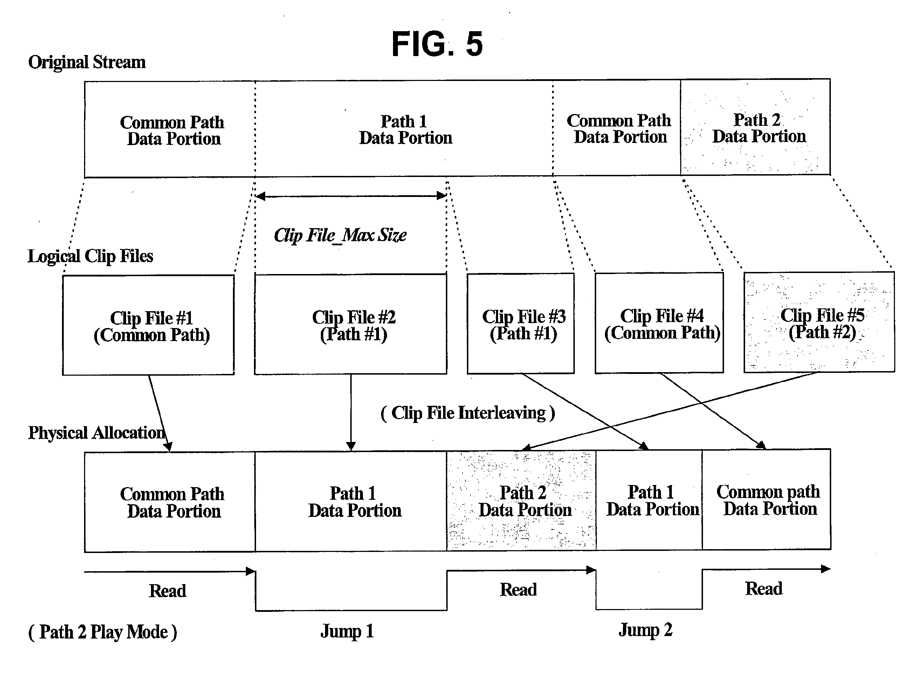

Fig. 5 illustrates an example of this embodiment. As shown, an original data stream to be recorded on the recording medium (e.g. , a BD-ROM) has an order of a common path data portion, a first reproduction path data portion, another common path data portion, and a second reproduction path data portion. The first common path data portion is managed as a first clip file Clip File #1. The first reproduction path data portion, however, includes data exceeding the maximum file size Clip File_Max Size. Consequently, the first reproduction path data portion is broken into more than one clip file, each clip file including data less than the maximum file size Clip File_Max Size. In the example of Fig. 5, the first data portion is managed as second and third clip files Clip File #2 and Clip File #3. The second common path data portion is managed as a fourth clip file Clip File #4, and the second reproduction path data portion is managed as a fifth clip file Clip File #5.

The first through fifth clip files Clip File #1, Clip File #2, Clip File #3, Clip File #4, and Clip File #5 are recorded in a physically interleaved fashion on the recording medium. As shown, the physical recording is successively carried out in the order of the first common path data portion of the first clip file, the first reproduction path data stream of the second clip file, the second reproduction path data portion of the fifth clip file, the first reproduction path data portion of the third clip file, and the second common path data portion of the fourth clip file.

Accordingly, the first reproduction path data portion of the second and third clip files and the second reproduction path data portion of the fifth clip file are recorded in an interleaved state between the first common path data portion of the first clip file and the second common path data portion of the fourth clip file.

When a reproduction operation for the data of the second reproduction path is designated at the request of the user using an optical disc reproducing apparatus, the optical disc apparatus reads out and reproduces the first common path data portion of the first clip file, and then carries out a jumping operation to the second reproduction path data portion of the fifth clip file, as shown in Fig. 5. Thereafter, the optical disc apparatus carries out a reproduction operation for the second reproduction path by reading out and reproducing the second common path data portion of the fourth clip file. Accordingly, the user can selectively play a data stream of a desired reproduction path.

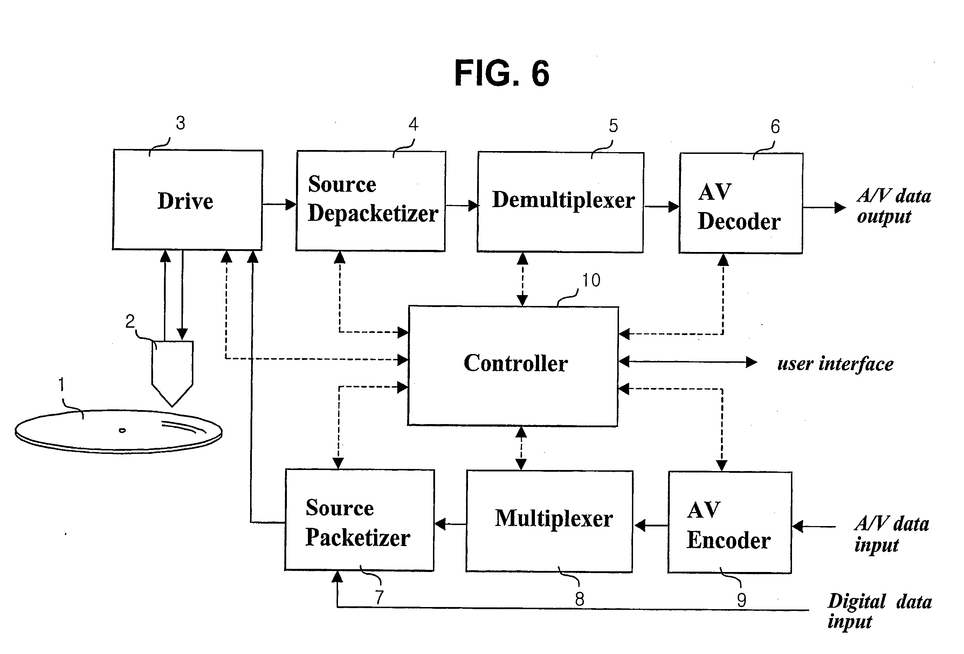

Fig. 6 illustrates a schematic diagram of an embodiment of an optical disk recording and reproducing apparatus according to the present invention. As shown, an AV encoder 9 receives and encodes audio and video data. The AV encoder 9 outputs the encoded audio and video data along with coding information and stream attribute information. A multiplexer 8 multiplexes the encoded audio and video data based on the coding information and stream attribute information to create, for example, an MPEG-2 transport stream. A source packetizer 7 packetizes the transport packets from the multiplexer 8 into source packets in accordance with the audio/video format of the optical disk. As shown in Fig. 6, the operations of the AV encoder 9, the multiplexer 8 and the source packetizer 7 are controlled by a controller 10. The controller 10 receives user input on the recording operation, and provides control information to AV encoder 9, multiplexer 8 and the source packetizer 7. For example, the controller 10 instructs the AV encoder 9 on the type of encoding to perform, instructs the multiplexer 8 on the transport stream to create, and instructs the source packetizer 7 on the source packet format. The controller 10 further controls a drive 3 to record the output from the source packetizer 7 on the optical disk.

The controller 10 also creates the navigation, management, etc. information for managing reproduction of the audio/video data being recorded on the optical disk. For example, based on information received via the user interface (e.g. , instruction set saved on disk, provided over an intranet or internet by a computer system, etc.) the controller 10 controls the drive 3 to record the data structure of Figs. 2, 4 and 5 on the optical disk.

During reproduction, the controller 10 controls the drive 3 to reproduce this data structure. Based on the information contained therein, as well as user input received over the user interface (e.g., control buttons on the recording and reproducing apparatus or a remote associated with the apparatus), the controller 10 controls the drive 3 to reproduce the audio/video source packets from the optical disk. For example, the user input may specify a path to reproduce. This user input may be specified, for example, via a menu based graphical user interface preprogrammed into the controller 10. Using the user input and the path management or change information reproduced from the optical disk, the controller 10 controls the reproduction of the specified path or changing the reproduction of the specified path as described above with respect to the embodiments of the present invention.

The reproduced source packets are received by a source depacketizer 4 and converted into a data stream (e.g., an MPEG-2 transport packet stream) . A demultiplexer 5 demultiplexes the data stream into encoded video and audio data. An AV decoder 6 decodes the encoded video and audio data to produce the original audio and video data that was feed to the AV encoder 9. During reproduction, the controller 10 controls the operation of the source depacketizer 4, demultiplexer 5 and AV decoder 6. The controller 10 receives user input on the reproducing operation, and provides control information to AV decoder 6, demultiplexer 5 and the source packetizer 4. For example, the controller 10 instructs the AV decoder 9 on the type of decoding to perform, instructs the demultiplexer 5 on the transport stream to demultiplex, and instructs the source depacketizer 4 on the source packet format.

While Fig. 6 has been described as a recording and reproducing apparatus, it will be understood that only a recording or only a reproducing apparatus may be provided using those portions of Fig. 6 providing the recording or reproducing function.

As apparent from the above description, the present invention provides a multiple reproduction path data stream managing method for high-density optical discs which can rapidly and accurately access the data streams of the path designated by the user in a jumped fashion in order to reproduce the data streams, while being capable of minimizing a reduction in the recording efficiency of multi-path data streams.

As will be appreciated from the forgoing disclosure, the present invention provides a recording medium having a file or data structure that permits managing and/or controlling navigation of the reproduction of video data on a multiple reproduction path basis. Accordingly, the present invention provides a greater level of flexibility in the reproduction of video data than previously available.

While the invention has been disclosed with respect to a limited number of embodiments, those skilled in the art, having the benefit of this disclosure, will appreciate numerous modifications and variations there from. For example, while described with respect to a Blu-ray ROM optical disk in several instances, the present invention is not limited to this standard of optical disk or to optical disks. It is intended that the present invention covers all such modifications and variations, provided they fall within the scope of the appended claims.

## Claims

1. A recording medium (1) having a data structure for managing reproduction of at least video data having multiple reproduction paths, comprising:
clip files of at least video data for a title, the title including a common portion for a common reproduction path and a multi path portion for multiple reproduction paths, each clip file including the video data of one of the common reproduction path and a particular reproduction path, the common reproduction path being a single reproduction path,
the particular reproduction path being one path among the multiple reproduction paths;
a playlist file including at least one playitem, the playitem indicating an in-point and an out-point for identifying a playing interval in the video data; and
clip information files including at least one map,
each one of the clip information files including information usable for different one of the clip files, the map mapping a presentation time to an address of at least one entry point in the associated clip file,
wherein each playitem identifies the clip information file associated with the clip file.

2. The recording medium (1) of claim 1, wherein the video data is divided into interleaving units, the interleaving units of the multiple reproduction paths are interleaved from one another, a size of each interleaving unit is in a predetermined range related to a buffer occupancy so as to seamlessly reproduce the video data for a jump operation among the multiple reproduction paths.

3. The recording medium (1) of claim 2, wherein the size of the interleaving units is to prevent a reproducing apparatus buffer from under-flowing or over-flowing during reproduction of the clip files.

4. The recording medium (1) of claim 3, wherein more than one interleaving unit is associated with the particular reproduction path when the one of the common reproduction path and the particular reproduction path includes data exceeding the size of the interleaving unit to prevent the reproducing apparatus buffer from over-flowing during reproduction of the clip files.

5. The recording medium (1) of any one of claims 1 to 4,
wherein the video data is recorded as source packets,
the source packet including a header and a transport packet, a transport packet includes a packet identifier (PID) and the source packet includes a source packet number indicating the address in the video data, each entry point is associated with one of source packet numbers.

6. A method of recording a data structure for managing reproduction of at least video data having multiple reproduction paths on a recording medium (1), comprising:
recording clip files of at least video data for a title, the title including a common portion for a common reproduction path and a multi path portion for multiple reproduction paths, each clip file including the video data of one of the common reproduction path and a particular reproduction path, the common reproduction path being a single reproduction path,
the particular reproduction path being one path among
the multiple reproduction paths;
recording at least one playlist file, the playlist
file including at least one playitem, the playitem indicating an in-point and an out-point for identifying a playing interval in the video data; and recording clip information files, the clip information files including at least one map, each one of the clip information files including information usable for different one of the clip files, the map mapping a presentation time to an address of at least one entry point in the associated clip file,
wherein each playitem identifies the clip information file associated with the clip file.

7. The method of claim 6, wherein
the video data is divided into interleaving units, the interleaving units of the multiple reproduction paths are interleaved from one another, a size of each interleaving unit is in a predetermined range related to a buffer occupancy so as to seamlessly reproduce the video data for a jump operation among the multiple reproduction paths; and
the size of the interleaving unit is to prevent a reproducing apparatus buffer from under-flowing or over-flowing during reproduction of the clip files.

8. A method of reproducing a data structure for managing reproduction of at least video data having multiple reproduction paths recorded on a recording medium (1), comprising:
reading at least one playlist file, the playlist file including at least one playitem, the playitem indicating an in-point and an out-point for identifying a playing interval in the video data;
reading one or more clip information files, the clip information files including at least one map, each one of the clip information files including information usable for different one of the clip files, the map
mapping a presentation time to an address of at least one entry point in the associated clip file; and
reproducing one or more clip files of at least video data for a title, the title including a common portion for the common reproduction path and a multi path portion for the multiple reproduction paths, each clip file including the video data of one of the common reproduction path and the particular reproduction path, the common reproduction path being a single reproduction path, the particular reproduction path being one path among the multiple reproduction paths wherein each playitem identifies the clip information file associated with the clip file.

9. The method of claim 8, wherein
the video data are divided into interleaving units, the interleaving units of the multiple reproduction paths are interleaved from one another, a size of each interleaving unit is in a predetermined range related to a buffer occupancy so as to seamlessly reproduce the video data for a jump operation among the multiple reproduction paths; and
the size of the interleaving unit is to prevent a reproducing apparatus buffer from under-flowing or over-flowing during reproduction of the clip files.

10. An apparatus for recording a data structure for managing reproduction of at least video data having multiple reproduction paths on a recording medium (1), comprising:
a recording unit (2) configured to record data on the recording medium (1); and
a controller (10) operatively coupled to the recording unit (2),
wherein the controller (10) is configured to control the recording unit (2)
to record clip files of at least video data for a title, the title including a common portion for a common reproduction path and a multi path portion for multiple reproduction paths, each clip file including the video data of one of a common reproduction path and a particular reproduction path, the common reproduction path being a single reproduction path, the particular reproduction path being one path among the multiple reproduction paths;
to record at least one playlist file, the playlist file including at least one playitem, the playitem indicating an in-point and an out-point for identifying a playing interval in the video data; and
to record clip information files, the clip information files including information usable for at least one map, each one of the clip information files being associated with different one of the clip files, the map mapping a presentation time to an address of at least one entry point in the associated clip file,
wherein each playitem identifies the clip information file associated with the clip file.

11. The apparatus of claim 10, wherein
the video data is divided into interleaving units, the interleaving units of the multiple reproduction paths are interleaved from one another, a size of each interleaving unit is in a predetermined range related to a buffer occupancy so as to seamlessly reproduce the video data for a jump operation among the multiple reproduction paths; and
the size of the interleaving unit is to prevent a reproducing apparatus buffer from under-flowing or over-flowing during reproduction of the clip files.

12. The apparatus of claim 10 or 11, further comprising:
an encoder (9) operatively coupled to the controller (10), configured to encode at least video data having multiple reproduction paths,
wherein the controller (10) is further configured to control the recording unit (2) to record the clip files of the video data output from the encoder (9).

13. An apparatus for reproducing a data structure for managing reproduction of at least video data having multiple reproduction paths recorded on a recording medium (1), comprising:
a reproducing unit (2) configured to reproduce data from the recording medium (1);
a controller (10) operatively coupled to the reproducing unit (2),
wherein the controller (10) is configured to control the reproducing unit (2) to
read at least one playlist file, the playlist file including at least one playitem, the playitem indicating an in-point and an out-point for identifying a playing interval in the video data;
read one or more clip information files, the clip information files including at least one map, each one of the clip information files including information usable for different one of the clip files, the map mapping a presentation time to an address of at least one entry point in the associated clip file; and
to reproduce one or more clip files of at least video data of a title, the title including a common portion for the common reproduction path and a multi path portion for the multiple reproduction paths, each clip file including the video data of one of the common reproduction path and the particular reproduction path, the common reproduction path being a single reproduction path, the particular reproduction path being one path among the multiple reproduction, paths,
wherein each playitem identifies the clip information file associated with the clip file.

14. The apparatus of claim 13, wherein
the video data is divided into interleaving units, the interleaving units of the multiple reproduction paths
are interleaved from one another, a size of each interleaving unit is in a predetermined range related
to a buffer occupancy so as to seamlessly reproduce the video data for a jump operation among the multiple reproduction paths; and
the size of the interleaving unit is to prevent a reproducing apparatus buffer from under-flowing or over-flowing during reproduction of the clip files.

15. The apparatus of claim 13 or 14, wherein
the video data is recorded as source packets, the source packet including a header and a transport packet, a transport packet includes a packet identifier (PID) and the source packet includes a source packet number indicating the address in the video data, each entry point is associated with one of source packet numbers; and
wherein the clip information file, the playlist file and the clip file are logically separated and include different file extensions respectively.

## Patentansprüche

1. Aufzeichnungsmedium (1) mit einer Datenstruktur zum Verwalten der Wiedergabe von mindestens Videodaten mit mehreren Wiedergabepfaden, das Folgendes umfasst:
Clip-Dateien von mindestens Videodaten für einen Titel, wobei der Titel einen gemeinsamen Abschnitt für einen gemeinsamen Wiedergabepfad und einen Mehrpfadabschnitt für mehrere Wiedergabepfade umfasst, wobei jede Clip-Datei die Videodaten von einem von dem gemeinsamen Wiedergabepfad und einem bestimmten Wiedergabepfad umfasst, wobei es sich bei dem gemeinsamen Wiedergabepfad um einen einzigen Wiedergabepfad handelt, wobei es sich bei dem bestimmten Wiedergabepfad um einen Pfad unter den mehreren Wiedergabepfaden handelt;
eine Abspiellistendatei, die mindestens ein Abspielstück umfasst, wobei das Abspielstück einen In-point und einen Out-Point zum Identifizieren eines Abspielintervalls in den Videodaten umfasst; und
Clip-Informationsdateien, die mindestens eine Abbildung umfassen, wobei jede der Clip-Informationsdateien für eine andere der Clip-Dateien verwendbare Informationen umfasst, wobei die Abbildung eine Präsentationszeit auf eine Adresse von mindestens einer Eingangsstelle in der assoziierten Clip-Datei abbildet,
wobei jedes Abspielstück die mit der Clip-Datei assoziierte Clip-Informationsdatei identifiziert.

2. Aufzeichnungsmedium (1) nach Anspruch 1, wobei die Videodaten in verschachtelte Einheiten unterteilt sind, die verschachtelten Einheiten der mehreren Wiedergabepfade miteinander verschachtelt sind, eine Größe jeder verschachtelten Einheit in einem vorherbestimmten Bereich liegt, der mit einer Pufferspeicherbelegung zusammenhängt, um die Videodaten für eine Sprungoperation unter den mehreren Wiedergabepfaden nahtlos wiederzugeben.

3. Aufzeichnungsmedium (1) nach Anspruch 2, wobei die Größe der verschachtelten Einheiten verhindern soll, dass ein Wiedergabevorrichtungs-Pufferspeicher während der Wiedergabe der Clip-Dateien unterläuft oder überläuft.

4. Aufzeichnungsmedium (1) nach Anspruch 3, wobei mehr als eine verschachtelte Einheit mit dem bestimmten Wiedergabepfad assoziiert ist, wenn der eine des gemeinsamen Wiedergabepfads und des bestimmten Wiedergabepfads die Größe der verschachtelten Einheit übersteigende Daten umfasst, um zu verhindern, dass der Wiedergabevorrichtungs-Pufferspeicher während der Wiedergabe der Clip-Dateien überläuft.

5. Aufzeichnungsmedium (1) nach einem der Ansprüche 1 bis 4, wobei die Videodaten als Quellpakete aufgezeichnet werden, wobei das Quellpaket einen Dateikopf und ein Transportpaket umfasst, ein Transportpaket eine Paketkennung (PID) umfasst und das Quellpaket eine Quellpaketnummer umfasst, die die Adresse in den Videodaten angibt, wobei jede Eingangsstelle mit einer der Quellpaketnummern assoziiert ist.

6. Verfahren zum Aufzeichnen einer Datenstruktur zum Verwalten der Wiedergabe von mindestens Videodaten mit mehreren Wiedergabepfaden auf einem Aufzeichnungsmedium (1), das Folgendes umfasst:
Aufzeichnen von Clip-Dateien von mindestens Videodaten für einen Titel, wobei der Titel einen gemeinsamen Abschnitt für einen gemeinsamen Wiedergabepfad und
einen Mehrpfadabschnitt für mehrere Wiedergabepfade umfasst, wobei jede Clip-Datei die Videodaten von einem von dem gemeinsamen Wiedergabepfad und einem bestimmten Wiedergabepfad umfasst, wobei es sich bei dem gemeinsamen Wiedergabepfad um einen einzigen Wiedergabepfad handelt und es sich bei dem bestimmten Wiedergabepfad um einen Pfad unter den mehreren Wiedergabepfaden handelt;
Aufzeichnen von mindestens einer Abspiellistendatei, wobei die Abspiellistendatei mindestens ein Abspielstück umfasst, wobei das Abspielstück einen In-Point und
einen Out-Point zum Identifizieren eines Abspielintervalls in den Videodaten angibt;
und
Aufzeichnen von Clip-Informationsdateien, wobei die Clip-Informationsdateien mindestens eine Abbildung umfassen, wobei jede der Clip-Informationsdateien für eine andere der Clip-Dateien verwendbare Informationen umfasst, wobei die Abbildung eine Präsentationszeit auf eine Adresse von mindestens einer Eingangsstelle in der assoziierten Clip-Datei abbildet,
wobei jedes Abspielstück die mit der Clip-Datei assoziierte Clip-Informationsdatei identifiziert.

7. Verfahren nach Anspruch 6, wobei:
die Videodaten in verschachtelte Einheiten unterteilt sind, die verschachtelten Einheiten der mehreren Wiedergabepfade miteinander verschachtelt sind, eine Größe jeder verschachtelten Einheit in einem vorherbestimmten Bereich liegt, der mit einer Pufferspeicherbelegung zusammenhängt, um die Videodaten für eine Sprungoperation unter den mehreren Wiedergabepfaden nahtlos wiederzugeben;
und
die Größe der verschachtelten Einheit verhindern soll, dass ein Wiedergabevorrichtungs-Pufferspeicher während der Wiedergabe der Clip-Dateien unterläuft oder überläuft.

8. Verfahren zum Wiedergeben einer Datenstrukturzum Verwalten der Wiedergabe von mindestens Videodaten mit mehreren Wiedergabepfaden, die auf einem Aufzeichnungsmedium (1) aufgezeichnet sind, das Folgendes umfasst:
Lesen von mindestens einer Abspiellistendatei, wobei die Abspiellistendatei mindestens ein Abspielstück umfasst, wobei das Abspielstück einen In-Point und
einen Out-Point zum Identifizieren eines Abspielintervalls in den Videodaten angibt;
Lesen von einer oder mehreren Clip-Informationsdateien, wobei die Clip-Informationsdateien mindestens eine Abbildung umfassen, wobei jede der Clip-Informationsdateien für eine andere der Clip-Dateien verwendbare Informationen umfasst, wobei die Abbildung eine Präsentationszeit auf eine Adresse von mindestens einer Eingangsstelle in der assoziierten Clip-Datei abbildet; und
Wiedergeben von einer oder mehreren Clip-Dateien von mindestens Videodaten für einen Titel, wobei der Titel einen gemeinsamen Abschnitt für den gemeinsamen Wiedergabepfad und einen Mehrpfadabschnitt für die mehreren Wiedergabepfade umfasst, wobei jede Clip-Datei die Videodaten von einem von dem gemeinsamen Wiedergabepfad und dem bestimmten Wiedergabepfad umfasst, wobei es sich bei dem gemeinsamen Wiedergabepfad um einen einzigen Wiedergabepfad handelt und
es sich bei dem bestimmten Wiedergabepfad um einen Pfad unter den mehreren Wiedergabepfaden handelt, wobei jedes Abspielstück die mit der Clip-Datei assoziierte Clip-Informationsdatei identifiziert.

9. Verfahren nach Anspruch 8, wobei
die Videodaten in verschachtelte Einheiten unterteilt sind, die verschachtelten Einheiten der mehreren Wiedergabepfade miteinander verschachtelt sind, eine Größe jeder verschachtelten Einheit in einem vorherbestimmten Bereich liegt, der mit einer Pufferspeicherbelegung zusammenhängt, um die Videodaten für eine Sprungoperation unter den mehreren Wiedergabepfaden nahtlos wiederzugeben; und
die Größe der verschachtelten Einheit verhindern soll, dass ein Wiedergabevorrichtungs-Pufferspeicher während der Wiedergabe der Clip-Dateien unterläuft oder überläuft.

10. Vorrichtung zum Aufzeichnen einer Datenstruktur zum Verwalten der Wiedergabe von mindestens Videodaten mit mehreren Wiedergabepfaden auf einem Aufzeichnungsmedium (1), die Folgendes umfasst:
eine Aufzeichnungseinheit (2), die dazu ausgebildet ist, Daten auf dem Aufzeichnungsmedium (1) aufzuzeichnen; und
einen Kontroller (10), der wirksam mit der Aufzeichnungseinheit (2) gekoppelt ist,
wobei der Kontroller (10) dazu ausgebildet ist, die Aufzeichnungseinheit (2) dazu zu steuern:
Clip-Dateien von mindestens Videodaten für einen Titel aufzuzeichnen, wobei der Titel einen gemeinsamen Abschnitt für einen gemeinsamen Wiedergabepfad und
einen Mehrpfadabschnitt für mehrere Wiedergabepfade umfasst, wobei jede Clip-Datei die Videodaten von einem von einem gemeinsamen Wiedergabepfad und
einem bestimmten Wiedergabepfad umfasst, wobei es sich bei dem gemeinsamen Wiedergabepfad um einen einzigen Wiedergabepfad handelt und es sich bei dem bestimmten Wiedergabepfad um einen Pfad unter den mehreren Wiedergabepfaden handelt;
mindestens eine Abspiellistendatei aufzuzeichnen, wobei die Abspiellistendatei mindestens ein Abspielstück umfasst, wobei das Abspielstück einen In-Point und
einen Out-Point zum Identifizieren eines Abspielintervalls in den Videodaten angibt;
und
Clip-Informationsdateien aufzuzeichnen, wobei die Clip-Informationsdateien für mindestens eine Abbildung verwendbare Informationen umfassen, wobei jede der Clip-Informationsdateien mit einer unterschiedlichen der Clip-Dateien assoziiert ist,
wobei die Abbildung eine Präsentationszeit auf eine Adresse von mindestens einer Eingangsstelle in der assoziierten Clip-Datei abbildet,
wobei jedes Abspielstück die mit der Clip-Datei assoziierte Clip-Informationsdatei identifiziert.

11. Vorrichtung nach Anspruch 10, wobei
die Videodaten in verschachtelte Einheiten unterteilt sind, die verschachtelten Einheiten der mehreren Wiedergabepfade miteinander verschachtelt sind, eine Größe jeder verschachtelten Einheit in einem vorherbestimmten Bereich liegt, der mit einer Pufferspeicherbelegung zusammenhängt, um die Videodaten für eine Sprungoperation unter den mehreren Wiedergabepfaden nahtlos wiederzugeben; und
die Größe der verschachtelten Einheit verhindern soll, dass ein Wiedergabevorrichtungs-Pufferspeicher während der Wiedergabe der Clip-Dateien unterläuft oder überläuft.

12. Vorrichtung nach Anspruch 10 oder 11, die weiter Folgendes umfasst:
einen Codierer (9), der wirksam mit dem Kontroller (10) gekoppelt ist und dazu ausgebildet ist, mindestens Videodaten mit mehreren Wiedergabepfaden zu codieren,
wobei der Kontroller (10) weiter dazu ausgebildet ist, die Aufzeichnungseinheit (2) dazu zu steuern, die Clip-Dateien des Videodatenausgangs von dem Codlerer (9) aufzuzeichnen.

13. Vorrichtung zum Wiedergeben einer Datenstruktur zum Verwalten der Wiedergabe von mindestens Videodaten mit mehreren Wiedergabepfaden, die auf einem Aufzeichnungsmedium (1) aufgezeichnet sind, die Folgendes umfasst:
eine Wiedergabeeinheit (2), die dazu ausgebildet ist, Daten von dem Aufzeichnungsmedium (1) wiederzugeben;
einen Kontroller (10), der wirksam mit der Wiedergabeeinheit (2) gekoppelt ist,
wobei der Kontroller (10) dazu ausgebildet ist, die Wiedergabeeinheit (2) dazu zu steuern:
mindestens eine Abspiellisten datei zu lesen, wobei die Abspiellistendatei mindestens ein Abspielstück umfasst, wobei das Abspielstück einen In-Point und einen Out-Point zum Identifizieren eines Abspielintervalls in den Videodaten angibt;
eine oder mehrere Clip-Informationsdateien zu lesen, wobei die Clip-Informationsdateien mindestens eine Abbildung umfassen, wobei jede der Clip-Informationsdateien für eine andere der Clip-Dateien verwendbare Informationen umfasst, wobei die Abbildung eine Präsentationszeit auf eine Adresse von mindestens einer Eingangsstelle in der assoziierten Clip-Datei abbildet; und
eine oder mehrere Clip-Dateien von mindestens Videodaten eines Titels wiederzugeben, wobei der Titel einen gemeinsamen Abschnitt für den gemeinsamen Wiedergabepfad und einen Mehrpfadabschnitt für die mehreren Wiedergabepfade umfasst, wobei jede Clip-Datei die Videodaten von einem von dem gemeinsamen Wiedergabepfad und dem bestimmten Wiedergabepfad umfasst, wobei es sich bei dem gemeinsamen Wiedergabepfad um einen einzigen Wiedergabepfad handelt und
es sich bei dem bestimmten Wiedergabepfad um einen Pfad unter den mehreren Wiedergabepfaden handelt,
wobei jedes Abspielstück die mit der Clip-Datei assoziierte Clip-Informationsdatei identifiziert.

14. Vorrichtung nach Anspruch 13, wobei
die Videodaten in verschachtelte Einheiten unterteilt sind, die verschachtelten Einheiten der mehreren Wiedergabepfade miteinander verschachtelt sind, eine Größe jeder verschachtelten Einheit in einem vorherbestimmten Bereich liegt, der mit einer Pufferspeicherbelegung zusammenhängt, um die Videodaten für eine Sprungoperation unter den mehreren Wiedergabepfaden nahtlos wiederzugeben, und
die Größe der verschachtelten Einheit verhindern soll, dass ein Wiedergabevorrichtungs-Pufferspeicher während der Wiedergabe der Clip-Dateien unterläuft oder überläuft.

15. Vorrichtung nach Anspruch 13 oder 14, wobei
die Videodaten als Quellpakete aufgezeichnet werden, wobei das Quellpaket einen Dateikopf und ein Transportpaket umfasst, ein Transportpaket eine Paketkennung (PID) umfasst und das Quellpaket eine Quellpaketnummer umfasst, die die Adresse in den Videodaten angibt, wobei jede Eingangsstelle mit einer der Quellpaketnummern assoziiert ist; und
wobei die Clip-Informationsdatei, die Abspiellistendatei und die Clip-Datei logisch getrennt sind und jeweils unterschiedliche Dateierweiterungen umfassen.

## Revendications

1. Support d'enregistrement (1) ayant une structure de données pour gérer la reproduction d'au moins des données vidéo ayant de multiples trajets de reproduction, comprenant :
des fichiers de clip d'au moins des données vidéo pour un titre, le titre incluant une partie commune pour un trajet de reproduction commun et une partie multi-trajet pour de multiples trajets de reproduction, chaque fichier de clip incluant les données vidéo de l'un du trajet de reproduction commun et d'un trajet de reproduction particulier, le trajet de reproduction commun étant un trajet de reproduction unique, le trajet de reproduction particulier étant un trajet parmi les multiples trajets de reproduction ;
un fichier de liste de lecture incluant au moins un élément de lecture, l'élément de lecture indiquant un point d'entrée et un point de sortie pour identifier un intervalle de lecture dans les données vidéo ; et
les fichiers d'informations de clip incluant au moins une carte, chacun des fichiers d'informations de clip incluant des informations utilisables pour l'un différent des fichiers de clip, la carte cartographiant un temps de présentation à une adresse d'au moins un point d'entrée dans le fichier de clip associé,
dans lequel chaque élément de lecture identifie le fichier d'informations de clip associé au fichier de clip.

2. Support d'enregistrement (1) selon la revendication 1, dans lequel les données vidéo sont divisées en unités d'entrelacement, les unités d'entrelacement des multiples trajets de reproduction sont entrelacées les unes par rapport aux autres, une taille de chaque unité d'entrelacement est dans une plage prédéterminée par rapport à une occupation de tampon de façon à reproduire de façon continue les données vidéo pour une opération de saut parmi les multiples trajets de reproduction.

3. Support d'enregistrement (1) selon la revendication 2, dans lequel la taille des unités d'entrelacement est destinée à empêcher un soupassement ou un dépassement par le tampon d'appareil de reproduction pendant la reproduction des fichiers de clip.

4. Support d'enregistrement (1) selon la revendication 3, dans lequel plus d'une unité d'entrelacement est associée au trajet de reproduction particulier lorsque l'un des trajets de reproduction communs et du trajet de reproduction particulier inclut des données excédant la taille de l'unité d'entrelacement pour empêcher un dépassement par le tampon d'appareil de reproduction pendant la reproduction des fichiers de clip.

5. Support d'enregistrement (1) selon l'une quelconque des revendications 1 à 4, dans lequel les données vidéo sont enregistrées comme paquets sources, le paquet source incluant un en-tête et un paquet de transport, un paquet de transport inclut un identifiant de paquet (PID) et le paquet source inclut un numéro de paquet source indiquant l'adresse dans les données vidéo, chaque point d'entrée est associé à l'un des numéros de paquet source.

6. Procédé d'enregistrement d'une structure de données pour gérer la reproduction d'au moins des données vidéo ayant de multiples trajets de reproduction sur un support d'enregistrement (1), comprenant :
l'enregistrement de fichiers de clip d'au moins des données vidéo pour un titre, le titre incluant une partie commune pour un trajet de reproduction commun et une partie multi-trajet pour de multiples trajets de reproduction, chaque fichier de clip incluant les données vidéo de l'un du trajet de reproduction commun et d'un trajet de reproduction particulier, le trajet de reproduction commun étant un trajet de reproduction unique, le trajet de reproduction particulier étant un trajet parmi les multiples trajets de reproduction ;
l'enregistrement d'au moins un fichier de liste de lecture, le fichier de liste de lecture incluant au moins un élément de lecture, l'élément de lecture indiquant un point d'entrée et un point de sortie pour identifier un intervalle de lecture dans les données vidéo ; et
l'enregistrement de fichiers d'informations de clip, les fichiers d'informations de clip incluant au moins une carte, chacun des fichiers d'informations de clip incluant des informations utilisables pour des fichiers différents des fichiers de clip, la carte cartographiant un temps de présentation à une adresse d'au moins un point d'entrée dans le fichier de clip associé,
dans lequel chaque article de lecture identifie le fichier d'informations de clip associé au fichier de clip.

7. Procédé selon la revendication 6, dans lequel
les données vidéo sont divisées en unités d'entrelacement, les unités d'entrelacement des multiples trajets de reproduction sont entrelacées les unes par rapport aux autres, une taille de chaque unité d'entrelacement est dans une plage prédéterminée par rapport à une occupation de tampon de façon à reproduire de façon continue les données vidéo pour une opération de saut parmi les multiples trajets de reproduction ; et
la taille de l'unité d'entrelacement est destinée à empêcher un soupassement ou un dépassement par le tampon d'appareil de reproduction pendant la reproduction des fichiers de clip.

8. Procédé de reproduction d'une structure de données pour gérer la reproduction d'au moins des données vidéo ayant de multiples trajets de reproduction enregistrés sur un support d'enregistrement (1), comprenant :
la lecture d'au moins un fichier de liste de lecture, le fichier de liste de lecture incluant au moins un élément de lecture, l'élément de lecture indiquant un point d'entrée et un point de sortie pour identifier un intervalle de lecture dans les données vidéo ;
la lecture d'un ou plusieurs fichiers d'informations de clip, les fichiers d'informations de clip incluant au moins une carte, chacun des fichiers d'informations de clip incluant des informations utilisables pour l'un différent des fichiers de clip, la carte cartographiant un temps de présentation à une adresse d'au moins un point d'entrée dans le fichier de clip associé ; et
la reproduction d'un ou plusieurs fichiers de clip d'au moins des données vidéo pour un titre, le titre incluant une partie commune pour le trajet de reproduction commun et une partie multitrajet pour les multiples trajets de reproduction, chaque fichier de clip incluant les données vidéo de l'un du trajet de reproduction commun et du trajet de reproduction particulier, le trajet de reproduction commun étant un trajet de reproduction unique, le trajet de reproduction particulier étant un trajet parmi les multiples trajets de reproduction, dans lequel chaque élément de lecture identifie le fichier d'informations de clip associé au fichier de clip.

9. Procédé selon la revendication 8, dans lequel
les données vidéo sont divisées en unités d'entrelacement, les unités d'entrelacement des multiples trajets de reproduction sont entrelacées les unes par rapport aux autres, une taille de chaque unité d'entrelacement est dans une plage prédéterminée par rapport à une occupation de tampon de façon à reproduire de façon continue les données vidéo pour une opération de saut parmi les multiples trajets de reproduction ; et
la taille de l'unité d'entrelacement est destinée à empêcher un soupassement ou un dépassement par le tampon d'appareil de reproduction pendant la reproduction des fichiers de clip.

10. Appareil d'enregistrement d'une structure de données pour gérer la reproduction d'au moins des données vidéo ayant de multiples trajets de reproduction sur un support d'enregistrement (1), comprenant :
une unité d'enregistrement (2) configurée pour enregistrer des données sur le support d'enregistrement (1) ; et
une unité de commande (10) opérationnellement couplée à l'unité d'enregistrement (2),
dans lequel l'unité de commande (10) est configurée pour commander l'unité d'enregistrement (2)
pour enregistrer des fichiers de clip d'au moins des données vidéo pour un titre, le titre incluant une partie commune pour un trajet de reproduction commun et une partie multi-trajet pour de multiples trajets de reproduction, chaque fichier de clip incluant des données vidéo de l'un d'un trajet de reproduction commun et d'un trajet de reproduction particulier, le trajet de reproduction commun étant un trajet de reproduction unique, le trajet de reproduction particulier étant un trajet parmi les multiples trajets de reproduction ;
pour enregistrer au moins un fichier de liste de lecture, le fichier de liste de lecture incluant au moins un élément de lecture, l'élément de lecture indiquant un point d'entrée et un point de sortie pour identifier un intervalle de lecture dans les données vidéo ; et
pour enregistrer des fichiers d'informations de clip, les fichiers d'informations de clip incluant des informations utilisables pour au moins une carte, chacun des fichiers d'informations de clip étant associé à l'un différent des fichiers de clip, la carte cartographiant un temps de présentation à une adresse d'au moins un point d'entrée dans le fichier de clip associé, dans lequel chaque élément de lecture identifie le fichier d'informations de clip associé au fichier de clip.

11. Appareil selon la revendication 10, dans lequel
les données vidéo sont divisées en unités d'entrelacement, les unités d'entrelacement des multiples trajets de reproduction sont entrelacées les unes par rapport aux autres, une taille de chaque unité d'entrelacement est dans une plage prédéterminée par rapport à une occupation de tampon de façon à reproduire de façon continue les données vidéo pour une opération de saut parmi les multiples trajets de reproduction ; et
la taille de l'unité d'entrelacement est destinée à empêcher un soupassement ou un dépassement par le tampon d'appareil de reproduction pendant la reproduction des fichiers de clip.

12. Appareil selon la revendication 10 ou 11, comprenant en outre :
un encodeur (9) opérationnellement couplé à l'unité de commande (10), configuré pour encoder au moins des données vidéo ayant de multiples trajets de reproduction,
dans lequel l'unité de commande (10) est en outre configurée pour commander l'unité d'enregistrement (2) afin d'enregistrer les fichiers de clip des données vidéo émises en sortie par l'encodeur (9).

13. Appareil de reproduction d'une structure de données pour gérer la reproduction d'au moins des données vidéo ayant de multiples trajets de reproduction enregistrés sur un support d'enregistrement (1), comprenant :
une unité de reproduction (2) configurée pour reproduire des données à partir du support d'enregistrement (1) ;
une unité de commande (10) opérationnellement couplée à l'unité de reproduction (2),
dans lequel l'unité de commande (10) est configurée pour commander l'unité de reproduction (2) à
lire au moins un fichier de liste de lecture, le fichier de liste de lecture incluant au moins un élément de lecture, l'élément de lecture indiquant un point d'entrée et un point de sortie pour identifier un intervalle de lecture dans les données vidéo ;
lire un ou plusieurs fichiers d'informations de clip, les fichiers d'informations de clip incluant au moins une carte, chacun des fichiers d'informations de clip incluant des informations utilisables pour l'un différent des fichiers de clip, la carte cartographiant un temps de présentation à une adresse d'au moins un point d'entrée dans le fichier de clip associé ; et
pour reproduire un ou plusieurs fichiers de clip d'au moins des données vidéo d'un titre, le titre incluant une partie commune pour le trajet de reproduction commun et une partie multitrajet pour les multiples trajets de reproduction, chaque fichier de clip incluant les données vidéo de l'un du trajet de reproduction commun et du trajet de reproduction particulier, le trajet de reproduction commun étant un trajet de reproduction unique, le trajet de reproduction particulier étant un trajet parmi les multiples trajets de reproduction ; dans lequel chaque élément de lecture identifie le fichier d'informations de clip associé au fichier de clip.

14. Appareil selon la revendication 13, dans lequel
les données vidéo sont divisées en unités d'entrelacement, les unités d'entrelacement des multiples trajets de reproduction sont entrelacées les unes par rapport aux autres, une taille de chaque unité d'entrelacement est dans une plage prédéterminée par rapport à une occupation de tampon de façon à reproduire de façon continue les données vidéo pour une opération de saut parmi les multiples trajets de reproduction ; et
la taille de l'unité d'entrelacement est destinée à empêcher un soupassement ou un dépassement par l'appareil de reproduction de tampon pendant la reproduction des fichiers de clip.

15. Appareil selon la revendication 13 ou 14, dans lequel
les données vidéo sont enregistrées comme paquets sources, le paquet source incluant un en-tête et un paquet de transport, un paquet de transport inclut un identifiant de paquet (PID) et le paquet source inclut un numéro de paquet source indiquant l'adresse dans les données vidéo, chaque point d'entrée est associé à l'un des numéros de paquet source ;
et
dans lequel le fichier d'informations de clip, le fichier de liste de lecture et le fichier de clip sont logiquement séparés et incluent différentes extensions de fichier respectivement.
